# EUROPÄISCHE PATENTSCHRIFT

(11) **EP 1 611 781 B1**
(45) Veröffentlichungstag und Bekanntmachung des Hinweises auf die Patenterteilung: **20.08.2008**
(21) Anmeldenummer: 05010412.4
(22) Anmeldetag: 13.05.2005
(51) Int. Cl.: A01D 41/14

(54) **Stützradmechanismus an einem Vorsatzgerät**
Support wheel for a harvester attachment
Roue de support pour attachement pour machine de récolte

(30) Priorität: 01.07.2004 DE 102004032065
(43) Veröffentlichungstag der Anmeldung: 04.01.2006
(73) Patentinhaber: CLAAS Selbstfahrende Erntemaschinen GmbH, 33428 Harsewinkel (DE)
(72) Erfinder: Holtmann, Bernd, 48324 Sendenhorst (DE); Strieker, Norbert, 33415 Verl (DE); Bürmann, Dominik, 33415 Verl (DE)

(56) Entgegenhaltungen:
- EP-A- 1 261 247
- WO-A-86/00002
- DE-A1- 19 918 551
- US-A- 4 141 200

## Beschreibung

Die Erfindung betrifft einen Stützradmechanismus an einem Vorsatzgerät eines landwirtschaftlichen Fahrzeugs gemäß dem Oberbegriff des Anspruchs 1.

In der DE 199 18 551 A1 ist eine als Feldhäcksler ausgeführte landwirtschaftliche Erntemaschine offenbart, die frontseitig über einen ein landwirtschaftliches Arbeitsgerät aufnehmenden Zwischenanbau verfügt. Damit die Last des landwirtschaftlichen Vorsatzgerätes nicht ausschließlich über die in Fahrtrichtung vorn liegende Trägerfahrzeugachse abgestützt werden muss, sind in zumindest einem Ausführungsbeispiel dem Zwischenanbau Stützräder zugeordnet, die es ermöglichen, dass ein Teil der Last des Vorsatzgerätes über diese Stützräder in den Boden eingeleitet wird. Dies hat den Vorteil, dass die frontseitige Trägerfahrzeugachse nicht die gesamte Last des Vorsatzgerätes aufnehmen muss. Da die Achsen der Stützräder direkt an dem Zwischenanbau des Feldhäckslers angeordnet sind, ist eine Vertikalbewegung der Stützräder relativ zu dem Zwischenanbau nicht möglich. Dies führt dazu, dass beim Anheben des Zwischenanbaues die von den Stützrädern auf den Boden übertragene Last allmählich abnimmt und in dem Moment gleich Null wird, sobald die Stützräder ihren Kontakt zum Boden verloren haben. In diesem Zeitpunkt ist die Stützfunktion der Stützräder aufgehoben und die gesamte Last wirkt auf die Vorderachsen des Feldhäckslers.
Aus der EP 1 261 247 B1 geht eine Vorrichtung zur Bodenkopierung für Vorsatzgeräte an einem selbstfahrenden Mähdrescher hervor, deren Aufgabe es ist schnell und genau auf Bodenunebenheiten durch Höhen- und Querverstellung des Vorsatzgerätes zu reagieren. Gelöst wird diese Aufgabe durch unterschiedliche elektro - hydraulische Verbindungen zwischen den für die Bodenkopierung notwendigen Steuer- und Bedienelementen. Zwar wird hier eine effiziente Bodenkopierung erreicht, jedoch wird das Gewicht des Vorsatzgerätes und des Schrägförderers unmittelbar in die Vorderachse des Mähdreschers eingeleitet, so dass es an einer Lastverteilung, die gerade bei breiteren Vorsatzgeräten wichtig ist, fehlt.

Demzufolge ist es Aufgabe der Erfindung einen Stützradmechanismus zu entwickeln, der sich in einen Bodenkopiermechanismus einbindet und so selbst bei großen Vorsatzgeräten eine optimale Erntefahrt und Massenverteilung gewährleistet.

Diese Aufgabe wird durch die kennzeichnenden Merkmale des Anspruchs 1 gelöst.

Indem das Vorsatzgerät bodenkopierend geführt wird und das zumindest eine höhenveränderliche Stützrad in die Bodenkopiersteuerung der landwirtschaftlichen Arbeitsmaschine integriert ist, wird das Stützrad stets um das erforderliche und dem aktuellen Bodenniveau entsprechende Maß ausgelenkt, so dass die Stützräder, unabhängig von eintretenden Bodenvertiefungen oder Bodenerhöhungen, dauerhaft den Boden kontaktieren. Auf diese Weise wird ein wesentlicher Teil der durch das Vorsatzgerät hervorgerufenen und auf die Vorderachse der landwirtschaftlichen Maschine wirkenden Last gleichmäßig über die Stützräder in den Boden geleitet. Damit tritt eine dauerhafte Entlastung der Vorderachse ein, so dass insgesamt eine kostengünstigere Dimensionierung der Vorderachse der Landmaschine möglich ist.

Dadurch, dass das Stützrad von wenigstens einem Hubzylinder höhenbeweglich geführt wird und die Ansteuerung des Hubzylinders über ein von der Bodenkopiervorrichtung angesteuertes Steuerventil erfolgt, wobei das Steuerventil in Parallelschaltung zu den Steuerventilen der Bodenkopiersteuerung geschaltet ist, korrespondieren die parallel geschalteten Steuerventil miteinander, so dass unabhängig von der Querneigung oder Höhenverstellung des Schneidwerkes ein dauerhafter Kontakt der Stützräder mit dem Boden hergestellt wird und damit die Last des Schneidwerks während der gesamten Erntefahrt gleichmäßig in den Boden eingeleitet wird.
Außerdem wird stets eine optimale Lage des Vorsatzgerätes zu dem Boden gewährleistet und dadurch eine effektive Erntefahrt erzielt, so dass unabhängig von der Lage des Schneidwerks stets eine gleichmäßige Entlastung der Vorderachse des Mähdreschers gegeben ist.

Indem die die kolbenflächenseitigen Druckkammern verbindende Leitung der an dem Vorsatzgerät angeordneten Hubzylinder von wenigstens einer weiteren Leitung abgezweigt wird und diese weitere Leitung mit den kolbenflächenseitigen Druckkammern der an dem Schrägförderer angeordneten Hubzylinder verbunden ist, folgt die Auslenkung der Hubzylinder am Vorsatzgerät der Auslenkung der Stützräder am Schneidwerk und umgekehrt, so dass die Bewegungen aller Hubzylinder miteinander korrespondieren, so dass die Stützräder alle Veränderungen innerhalb des Hydraulikkreislaufes unmittelbar nachvollziehen, wodurch die Stützräder dauerhaft auf dem Boden stehen und somit unabhängig von dem Bodenniveau eine konstante Lastverteilung erfolgt.

Die selbsttätige Höhensteuerung des Vorsatzgerätes führt zu einer Entlastung des Fahrers der landwirtschaftlichen Arbeitsmaschine. Eine manuelle Höhensteuerung gibt dem Fahrer außerdem die Möglichkeit jederzeit in die Höhensteuerung, z.B. bei der Ablage des Schneidwerks auf einem dafür vorgesehenen Wagen, einzugreifen.

Die Anlenkung der Stützräder über einen Parallelogrammmechanismus gewährleistet auch bei hohen Vorsatzlasten einen gleichmäßigen Lauf und verhindert, dass die Stützräder bei vertikaler Bewegung des Vorsatzgerätes verkanten.

Da die in den Parallelogrammmechanismus integrierten Stützräder an der Rückseite des Schneidwerks angeordnet sind, wird die Last des Schneidwerks unmittelbar dort aufgenommen, wo sie auftritt. Hierdurch werden die dahinterliegenden Organe wie z.B. die Vorderachse des Mähdreschers, von dem Gewicht des Schneidwerks entlastet, indem die Stützräder die Last des Vorsatzgerätes in den Boden leiten. Gleichzeitig kann die Schneidwerkskonstruktion vereinfacht und damit Gewicht und Kosten eingespart werden.

Damit der Parallelogrammmechanismus nicht die Wendigkeit der landwirtschaftlichen Arbeitsmaschine einschränkt, ist der aus mindestens zwei Lenkern und wenigstens zwei Konsolen zusammengesetzte Parallelogrammmechanismus drehbeweglich mit einem Hubzylinder verbunden, so dass für eine optimale Einstellung der Lenkdrehachse der Stützräder gesorgt ist und die Stützräder ohne Einschränkung ihrer Lenkbewegung der Lenkbewegung der landwirtschaftlichen Maschine folgen können.

Indem die Lenkdrehachse des Stützrades durch den Parallelogrammmechanismus annähernd senkrecht gehalten wird, wird die auf das Stützrad wirkende Last stets in gleicher Weise in den Boden eingeleitet, so dass die Stützlast annähernd unverändert bleibt.

Weitere vorteilhafte Ausgestaltungen sind Gegenstand weiterer Unteransprüche und werden nachfolgend anhand von Zeichnungen näher erläutert.

Es zeigen:
- Figur 1:: eine Seitenansicht eines Schneidwerkes an einem selbstfahrenden Mähdrescher
- Figur 2:: die Rückseite eines Schneidwerks mit angeordnetem Stützrad
- Figur 3:: einen Hydraulikschaltplan der erfindungsgemäßen Bodenkopiersteuerung an einem selbstfahrenden Mähdrescher
- Figur 4:: einen Hydraulikschaltplan zur Durchführung des Anhebevorgangs des Schneidwerks an einem selbstfahrenden Mähdrescher

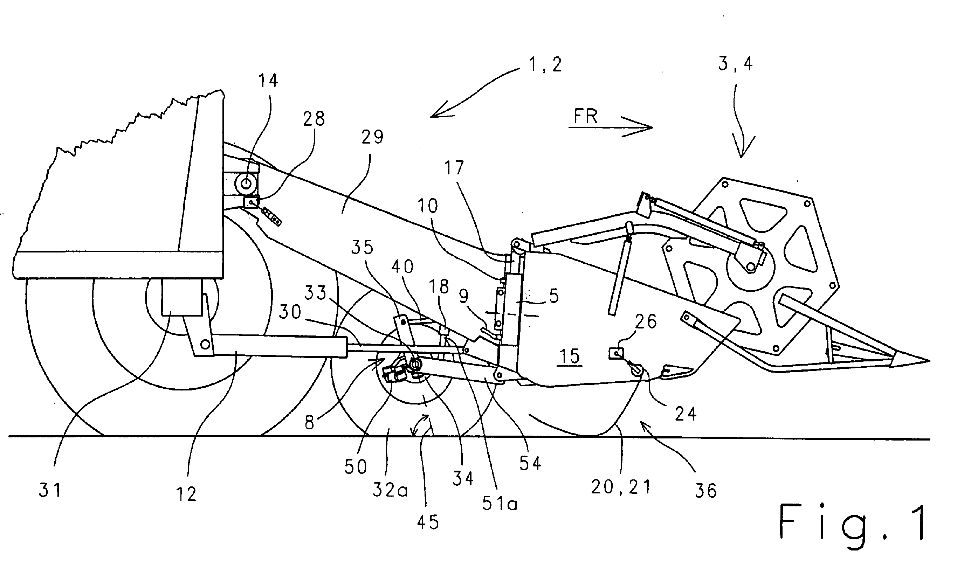

Figur 1 zeigt eine Seitenansicht einer selbstfahrenden Erntemaschine 1, die als Mähdrescher 2 ausgeführt und der frontseitig in Fahrtrichtung FR ein Vorsatzgerät 3, in Form eines Getreideschneidwerks 4, zugeordnet ist.
Das Vorsatzgerät 3 dient dazu, das zu bearbeitende Erntegut vom Feldboden aufzunehmen und zu schneiden, so dass es den nachgeordneten und hier nicht abgebildeten Arbeitsaggregaten zugeführt werden kann.
Dem Schneidwerk 4 ist ein Schrägförderer 29 nachgeordnet, wobei der Schrägförderer 29 über eine Schwenkachse 14 vertikal zu der Fahrtrichtung und zum Ausgleich der Längsneigung verschwenkbar ist.
Außerdem ist dem Schneidwerk 4 ein Parallelogrammmechanismus 8 zugeordnet, der einen Teil der Last des Schrägförderers 29 und der Last des Schneidwerks 4 aufnimmt und über ein mit dem Parallelogrammmechanismus 8 in Wirkverbindung stehendes Stützrad 32 a in den Boden einleitet.
Zur optimalen Aufnahme des Ernteguts ist das Vorsatzgerät 3 beweglich ausgeführt, indem das Vorsatzgerät 3 in seiner Höhe wie auch in seiner Querneigung geführt wird.

Die vertikale Höhenverstellung, d.h. der Längsneigungsausgleich in Fahrtrichtung, wie auch die Veränderung der Quemeigung des Getreideschneidwerkes 4 erfolgt in Abhängigkeit von dem aktuellen Bodenniveau und dient damit einer gleichmäßigen Stoppelhöhe des abgeemteten Emteguts.

Im dargestellten Ausführungsbeispiel sind zur Erkennung des aktuellen Bodenniveaus an jeder Seitenwand 15 des Getreideschneidwerkes 4 paarweise elastische Bodenabtastbügel 20, 21 angeordnet, die über eine drehbar gelagerte Verbundwelle 24 mit einem Abtastpotentiometer 26 gekoppelt sind und in noch näher zu beschreibender Weise Signale an eine Steuerelektronik zur Verstellung der Hubzylinder 5, 12, 18 senden.

Die parallel zueinander geschalteten Hubzylinder 12 regeln dabei den im weiteren Verlauf noch genauer beschriebenen Längsneigungsausgleich in Fahrtrichtung.
Gemäß einer vorteilhaften Ausführung sind die Hubzylinder 12 als doppeltwirkende Hubzylinder ausgeführt. Diese Ausführungsform hat den Vorteil, dass bei niedrigen Stützkräften mit der Kolbenringseite und bei höheren Stützkräften, die einen höheren Arbeitsdruck erfordern, mit der Kolbenfläche gearbeitet werden kann. Das Verhältnis von Kolbenringfläche zu Kolbenfläche entspricht dabei den Belastungszuständen der Erntemaschine 1 mit und ohne Vorsatzgerät 3.

Die Hubzylinder 5 regeln die Queranpassung des Schneidwerks 4 an das aktuelle Bodenniveau, wobei im vorliegenden Ausführungsbeispiel die Hubzylinder 5 in an sich bekannter Weise um eine in Fahrtrichtung weisende Mittelachse des Mähdreschers 2 verschwenkbar geführt werden.

Zur Unterstützung des Längsneigungsausgleichs sowie der Queranpassung des Schneidwerks 4 dienen die Hubzylinder 18. Den Hubzylindern 18 ist ein Parallelogrammmechanismus 8 zugeordnet, welcher ein Stützrad 32 a aufnimmt. Durch die besondere und im weiteren Verlauf noch näher beschriebene Anordnung des Hubzylinders 18 zu dem Parallelogrammmechanismus 8 und dem dauerhaft auf dem Boden stehenden Stützrad 32a wird über das Stützrad 32a ein Teil des Gewichts des Vorsatzgerätes 4 sowie des Gewichts des Schrägförderers 29 während des gesamten Erntebetriebs in den Boden eingeleitet. Infolgedessen wird die Vorderachse 31 des Mähdreschers 1 erheblich entlastet.

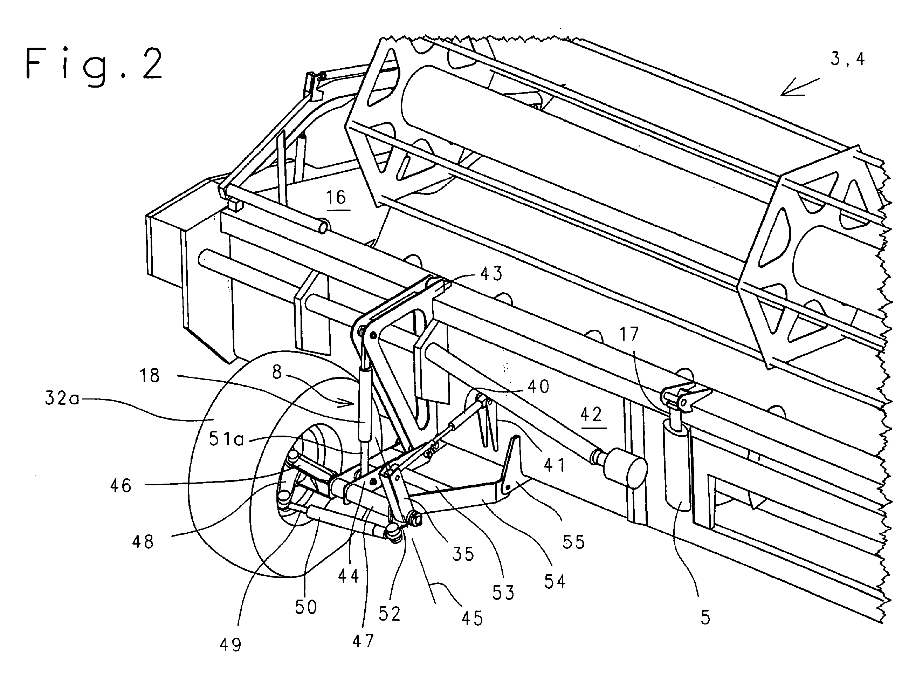

In Figur 2 ist die Rückseite eines Schneidwerks 4 mit angeordnetem Stützrad 32 a abgebildet.
Damit die Last des Schrägförderers 29 und des dem Schrägförderer 29 zugeordneten Getreideschneidwerks 4 nicht allein über die in Figur 1 abgebildeten Hubzylinder 12 in den Bereich der Vorderachse 31 des Mähdreschers 2 eingeleitet werden, sind dem Schneidwerk 4, im Bereich des Einzugskanals 39, beidseitig Stützräder 32, 32a zugeordnet.

Beide Stützräder 32a werden über den Parallelogrammmechanismus 8 angelenkt. Der Parallelogrammmechanismus 8 ist mit dem Schneidwerk 4 verbunden und setzt sich aus mindestens zwei Lenkern 40, 44 sowie wenigstens zwei Konsolen 33, 41 zusammen, wobei nachfolgend der in Figur 2 abgebildete Parallelogrammmechanismus 8 und die Verbindung mit dem Stützrad 32 a als ein mögliches von vielen Ausführungsbeispielen beschrieben wird.

Die Verbindung des Stützrades 32a mit dem Parallelogrammmechanismus 8 wird über eine die Innenseite der Nabe des Stützrades 32a durchsetzende Achsklaue 46 hergestellt. Die Achsklaue 46 ist über eine Welle 47 drehfest mit einem Hebel 35 verbunden. Das freie Ende des Hebels 35 ist drehbeweglich mit dem verstellbaren Oberlenker 40 verbunden. Der Oberlenker 40 ist ortsfest und drehbeweglich an der drehfest an der Rückwand 42 des Schneidwerks 4 angeordneten Konsole 41 angebracht und kann als mechanisch längenveränderbares Stellglied oder als Hydraulikzylinder ausgeführt sein.
Der Hubzylinder 18 ist drehbeweglich mit dem oberen Bereich eines an der Schneidwerksrückwand 42 angeordneten Haltebocks 43 verbunden, wobei die Kolbenstange 51a des Hubzylinders 18 drehbeweglich an dem Lenker 44 angeordnet ist. Durch das vom Bodenniveau abhängige Ein- und Ausfahren der Kolbenstange 51a des Hubzylinders 18, wird gewährleistet, dass das Stützrad 32a unabhängig von der Höhe und der Quemeigung des Schneidwerkes 4 stets den Boden berührt. Fährt beispielsweise die Kolbenstange 51a des Hubzylinders 18 aufgrund einer Bodenvertiefung aus, wird das Stützrad 32a abwärts, in die Bodenvertiefung hinein, bewegt, so dass das Stützrad 32a auch bei sich veränderndem Bodenniveau stets mit dem Boden in Kontakt steht.

Die Anordnung und Ausführung des Parallelogrammmechanismus 8 und die Verbindung mit dem Stützrad 32a bewirkt, dass die Lenkdrehachse 45 des Stützrades 32a annähernd senkrecht gehalten wir, so dass das Stützrad 32 stets optimal auf dem Boden steht. Demzufolge wird die auf das Stützrad 32a wirkende Last, unabhängig von dem Bodenniveau und der Stellung des Schneidwerks 4, stets in gleicher Weise in den Boden geleitet, wodurch die Stützlast annähernd unverändert bleibt und ein Teil des Gewichtes des Schrägförderers 29 und des Vorsatzgerätes 3 stets in gleicher Weise zur Entlastung der Vorderachse 31 des Mähdreschers 2, in den Boden eingeleitet wird.
Zur Optimierung des Lenkdrehwinkels ist es außerdem möglich die Lenkdrehachse 45 einstellbar auszuführen.

Überdies wird durch den Parallelogrammmechanismus 8 ein Verkanten des Vorsatzgerätes 3 mit den Stützrädern 32, 32a bei vertikaler Bewegung des Vorsatzgerätes 3 ausgeschlossen.

Zur Stabilisierung des Parallelogrammmechanismus 8 ist dem Lenker 44 eine Schwinge 53 zugeordnet, die parallel zu der Welle 47 verläuft und mit einem Hebel 54 und dem Lenker 44 verbunden ist. Der Hebel 54 umschließt dabei an seinem einen Ende drehbeweglich die Welle 47 und ist mit seinem anderen Ende drehbeweglich mit einer an der Schneidwerksrückwand 42 ortsfest angeordneten Konsole 55 verbunden.

Damit die Stützräder 32a aktiv gelenkt werden können, ist ein Lenkhebel 48 mit der Achsklaue 46 verbunden, wobei das freie Ende des Lenkhebels 48 einer Kolbenstange 49 eines Hubzylinders 50 drehbeweglich zugeordnet ist. Der Hubzylinder 50 wiederum ist drehbeweglich über ein Verbindungselement 52 mit der Welle 47 verbunden. Die Lenkung der Stützräder 32a erfolgt in an sich bekannter Weise in Abhängigkeit von der Stellung der nicht abgebildeten Lenkachse des Mähdreschers 2.
Denkbar wäre auch eine passiv ausgeführte Lenkung, wie beispielsweise durch den Einsatz einer an sich bekannten Nachlaufachse.

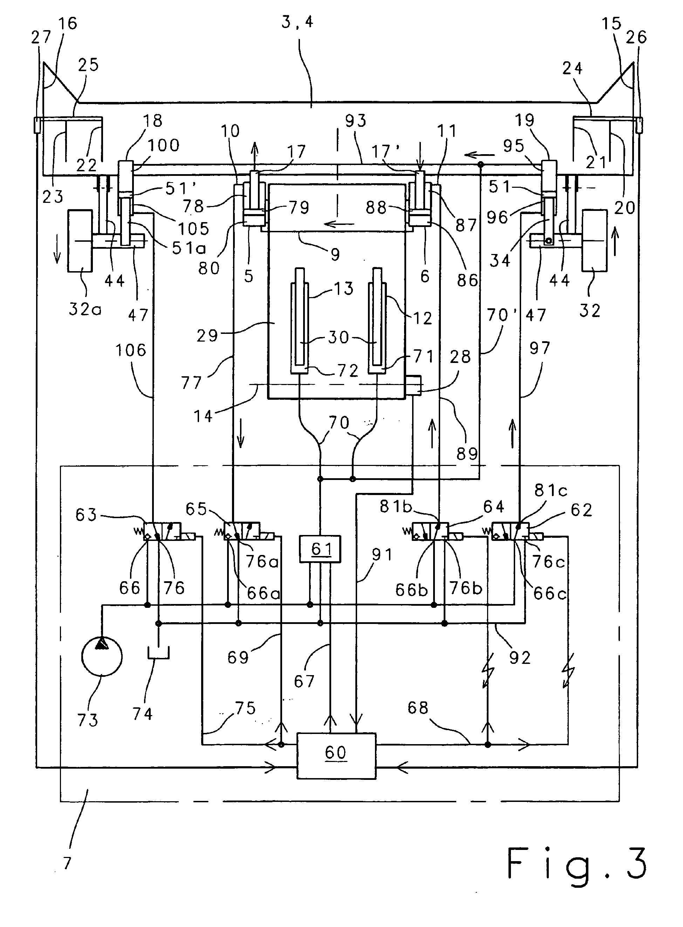

Figur 3 zeigt einen Hydraulikschaltplan der zugrundeliegenden Erfindung.
Die an dem Vorsatzgerät 3 angeordneten Bodenabtastbügel 20, 21, 22, 23 sensieren das Bodenniveau und übermitteln in Abhängigkeit von dem aktuellen Bodenniveau elektrische Signale an eine Steuerelektronik 60.
Die Steuerelektronik 60 generiert Stellsignale an fünf parallel zueinander geschaltete Steuerventile 61, 62, 63, 64, 65. Dabei fördert die Pumpe 73 über unterschiedliche Hydraulikleitungen Hydraulikfluid und druckbeaufschlagt - in Abhängigkeit von der Schaltposition der Steuerventile 62, 63, 64, 65 - die Hubzylinder 5, 6, 12, 13 18 und 19.
Auf diese Weise wird über die Hubzylinder 12, 13 der Längsneigungsausgleich, über die Hubzylinder 5, 6 der Querneigungsausgleich sowie über die Hubzylinder 18, 19 und den ihnen zugeordneten höhenveränderlichen Stützrädern 32, 32 a die Last des Vorsatzgerätes in den Boden geleitet, so dass die Vorderachse des Mähdreschers 2 entlastet wird. Hierdurch wird das bodenkopierend geführte Vorsatzgerät 3 optimal in die Bodenkopiersteuerung 7 integriert. Demzufolge wird erfindungsgemäß eine effiziente Verteilung der durch das Gewicht des Vorsatzgerätes 3 hervorgerufenen Lasten und eine bestmögliche und gleichmäßige Anpassung des Vorsatzgerätes 3 an ein aktuelles und sich ständig veränderndes Bodenniveau erreicht.

Die in der Figur 3 abgebildete Schaltstellung der Steuerventile 62, 63, 64, 65 ergibt sich aufgrund einer sensierten Bodenvertiefung auf der Seite der Bodenabtastbügel 22, 23 des Schneidwerks 4.

In der in Figur 3 dargestellten Schaltstellung sind die Druckanschlüsse 66, 66a, 66b, 66c der Steuerventile 62, 63, 64, 65 aufgrund der Bodenvertiefung gesperrt.
Der Rücklaufanschluss 76 des Steuerventils 63 ist freigeschaltet. Durch die Freischaltung des Rücklaufanschlusses 76 wird über die Hydraulikleitung 106 das Hydraulikfluid durch den abwärts verfahrenden Kolben 51' aus der kolbenringseitigen Druckkammer 105 des Hubzylinders 18 verdrängt und fließt in den Tank 74 ab. Auf diese Weise verfährt die Kolbenstange 51 a des Hubzylinders 18 aus dem Zylinder heraus und das Stützrad 32a wird abwärts in Richtung Boden und in die Bodenvertiefung hinein bewegt.

Zur Unterstützung des ausfahrenden Stützrades 32a wird das Steuerventil 65 über die Steuerelektronik 60 durch das gleiche von den Bodenabtastbügeln 22, 23 generierte Stellsignal beaufschlagt und in eine Schaltposition gebracht, in der der Rücklaufanschluss 76 a des Steuerventils 65 freigeschaltet ist. Aufgrund dieser Freischaltung kann das in der kolbenringseitigen Druckkammer 78 enthaltene Hydraulikfluid über die Hydraulikleitung 10 und über den Rücklaufanschluss 76 a in den Tank 74 abfließen und die Kolbenstange 17 bewegt sich aus dem Hubzylinder 5 heraus.

Demzufolge kann durch die Freischaltung der Rücklaufanschlüsse 76, 76a der Steuerventile 63, 65 die Bewegung der Kolbenstange 17 des Hubzylinders 5 der Bewegung der Kolbenstange 51 a des Hubzylinders 18 folgen.

Damit die aufgrund der Bodenvertiefung ausgelöste Schaltstellung des Steuerventils 63 des dem Stützrad 32a zugeordneten Hubzylinders 18 und des den Querneigungsausgleich regelnden Steuerventils 65 des Hubzylinders 5 mit der Schaltstellung des dem anderen Stützrad 32 zugeordneten Steuerventils 62 des Hubzylinders 19 sowie des weiteren den Querneigungsausgleich regelnden Steuerventils 64 des Hubzylinders 6 korrespondiert und hierdurch eine gleichmäßige Verstellung des Schneidwerks 4 in Querrichtung erreicht wird, müssen die Kolbenstange 17' des Hubzylinders 6 und die Kolbenstange 34 des Hubzylinders 19 um das gleiche Maß einfahren, wie die Kolbenstange 17 des Hubzylinders 5 und die Kolbenstange 51 a des Hubzylinders 18 aufgrund der sensierten Bodenvertiefung zuvor ausgefahren sind.
Dies wird dadurch erreicht, indem die Steuerelektronik 60 das Steuerventil 62 mit einem Signal beaufschlagt, wodurch das Steuerventil 62 in eine Schaltposition gebracht wird, in der der Arbeitsanschluss 81 c freigeschaltet ist. Durch die Freischaltung des Arbeitsanschlusses 81 c wird über eine Hydraulikleitung 97 eine Verbindung mit der kolbenringseitigen Druckkammer 96 des Hubzylinders 19 hergestellt, so dass die Pumpe 73 das Hydraulikfluid in die kolbenringseitige Druckkammer 96 des Hubzylinders 19 fördern kann.
Demzufolge wird die Kolbenringseite des Hubzylinders 19 druckbeaufschlagt und das Stützrad 32a wird eingefahren. Hierbei wird das in der kolbenflächenseitigen Druckkammer 95 des Hubzylinders 19 enthaltene Hydraulikfluid von dem verfahrenden Kolben 51 verdrängt und fließt über eine Hydraulikleitung 93 in die kolbenflächenseitige Druckkammer 100 des Hubzylinders 18.
Insgesamt vollzieht damit das einfahrende Stützrad 32 die Bewegung des ausfahrenden Stützrades 32a nach.

Desweiteren muss zur gleichmäßigen Verstellung des Schneidwerks 4 in Querrichtung das Steuerventil 64 beaufschlagt werden.
Das Steuerventil 64 wird über die Steuerelektronik 60 mit dem gleichen Signal wie das Steuerventil 62 beaufschlagt und in die abgebildete Schaltposition gebracht, so dass der Arbeitsanschluss 81 b freigeschaltet ist und das Hydraulikfluid von der Pumpe 73 in die kolbenringseitige Druckkammer 87 des Hubzylinders 6 gefördert wird. Hierdurch wird die Kolbenringseite des Hubzylinders 6 druckbeaufschlagt und die Kolbenstange 17' des Hubzylinders 6 fährt ein.

Durch die Verbindung der kolbenflächenseitigen Druckkammern 80, 86 der Hubzylinder 5, 6 über eine Hydraulikleitung 9 wird die durch den ausfahrenden Kolben 88 des Hubzylinders 6 verdrängte Hydraulikfluidmenge in die kolbenflächenseitige Druckkammer 80 des Hubzylinders 5 gefördert. Somit folgt auch die Bewegung der einfahrenden Kolbenstange 17'des Hubzylinders 6 der Bewegung der ausfahrenden Kolbenstange 17 des Hubzylinders 5.

Insgesamt ist daher das Verhältnis zwischen der Weite der ausfahrenden Kolbenstangen 17, 51 a der Hubzylinder 5, 18 zu der Weite der einfahrenden Kolbenstangen 17', 34 der Hubzylinder 6, 19 infolge der Ansteuerung der Ventile 62, 63, 64, 65 stets identisch, wodurch eine gleichmäßige Quemeigung des gesamten Schneidwerks 4 vollzogen wird, unabhängig von dem aktuellen sich permanent verändernden Bodenniveau weiterhin möglich ist, wobei die Last des Schneidwerks 4 dauerhaft von dem permanent mit dem Boden in Kontakt stehenden Stützrädern 32, 32a in den Boden eingeleitet wird.

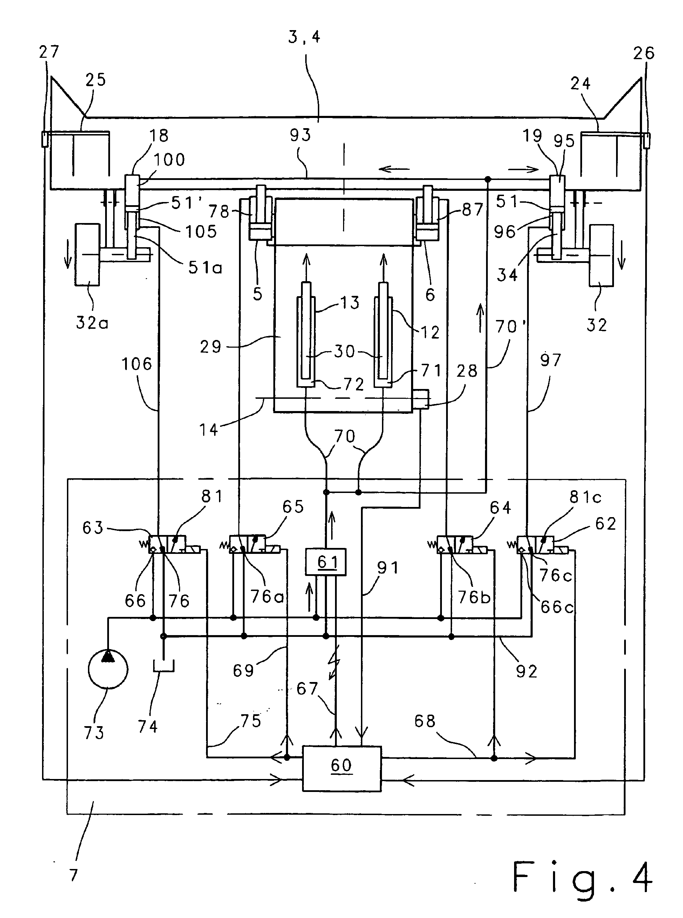

In der Figur 4 ist ein Hydraulikschaltplan zur Durchführung des Anhebevorgangs des Schneidwerks 4 dargestellt. Die Steuerventile 62, 63, 64, 65 sind dabei so beaufschlagt, dass die Rücklaufanschlüsse 76, 76a, 76b, 76c freigeschaltet sind und das Hydraulikfluid aus den kolbenringseitigen Druckkammern 78, 87, 96, 105 der Hubzylinder 5, 6, 18, 19 in den Tank 74 abfließen kann.
Dies bedeutet, wird das Schneidwerk 4 angehoben, fördert die Pumpe 73 über das Steuerventil 61 Hydraulikfluid über Hydraulikleitungen 70 in die kolbenflächensefigen Druckkammern 71, 72 der Hubzylinder 12, 13, so dass die Kolbenstangen 30 der Hubzylinder 12, 13 gleichmäßig ausfahren. Damit die Kolbenstangen 51 a, 34 der Hubzylinder 18, 19 die Bewegung der Kolbenstangen 30 der Hubzylinder 12, 13 nachvollziehen und dadurch die Stützräder 32, 32a ausfahren, werden die Hydraulikleitungen 70 von einer weiteren Hydraulikleitung 70' abgezweigt, wobei die Hydraulikleitung 70' über eine Hydraulikleitung 93 mit den kolbenflächenseitigen Druckkammern 95, 100 der Hubzylinder 18, 19 verbunden ist. Wird nun das Schneidwerk 4 angehoben, fördert die Pumpe 73 im gleichen Verhältnis das Hydraulikfluid in die kolbenflächenseitigen Druckkammern 71, 72 der Hubzylinder 12, 13 wie in die kolbenflächenseitigen Druckkammern 95, 100 der Hubzylinder 18, 19.
Durch die Druckbeaufschlagung der Kolben 51, 51' der Hubzylinder 18, 19 werden die Stützräder 32, 32a ausgefahren, und gegen den Boden gedrückt, so dass durch die ausfahrenden Stützräder 32, 32a der Anhebevorgang des Schneidwerkes 4 unterstützt wird und weiterhin die Last des Vorsatzgerätes 4, unabhängig von dessen Stellung, dauerhaft und gleichmäßig in den Boden eingeleitet wird.

Damit der Anhebevorgang des Schneidwerks 4 nicht von der Auslenkung der Hubzylinder 5, 6 beeinträchtigt wird, können den Steuerventilen 65, 64 nicht abgebildete Rückschlagventile zugeordnet werden, die beim Betrieb der erfindungsgemäßen Bodenkopiersteuerung die Leitungen bis zu einer definierten Druckbelastung sicher sperren und bei Nichtbetrieb die Zuleitungen zu den Hubzylindern 5, 6 ab einer festgelegten Druckentlastung öffnen.

Soll hingegen das Schneidwerk 4 auf den Boden oder auf einen Schneidwerkswagen abgelegt werden, müssen für diesen Vorgang die Stützräder 32, 32a angehoben sowie die Kolbenstangen 30 der Hubzylinder 12, 13 eingefahren werden.
Hierfür wird das Steuerventil 63 derart beaufschlagt, dass der Arbeitsanschluss 81 freigeschaltet und das Hydraulikfluid von der Pumpe 73 in die kolbenringseitige Druckkammer 105 des Hubzylinders 18 gefördert wird. Hierdurch wird die Kolbenringseite des Hubzylinders 18 druckbeaufschlagt und das Stützrad 32a fährt ein.

Parallel hierzu wird der Arbeitsanschluss 81 c des Steuerventils 62 freigeschaltet und die Pumpe 73 fördert das Hydraulikfluid in die kolbenringseitige Druckkammer 96 des Hubzylinders 19, so dass auch das Stützrad 32 angehoben wird.

Zum Senken des Schneidwerks 4 müssen außerdem die Kolbenstangen 30 der Hubzylinder 12, 13 eingefahren werden. Hierzu wird das Steuerventil 61 in eine Rücklaufstellung gebracht, wodurch das Hydraulikfluid aus den kolbenringseitigen Druckkammern 71, 72 der Hubzylinder 12, 13 verdrängt werden und in den Tank 74 fließen kann.
Durch das Einfahren der Stützräder 32, 32 a wird das in den kolbenflächenseitigen Druckkammern 95, 100 der Hubzylinder 18, 19 befindliche Hydraulikfluid durch die verfahrenden Kolben 51, 51' verdrängt und fließt infolgedessen über die Hydraulikleitungen 93, 70 und über das Steuerventil 61 in den Tank 74 ab.

Im übrigen bleiben die Hubzylinder 12, 13 bei konstanter Höhe des Schneidwerks 4 in einer unveränderten Schwimmstellung und werden nicht druckbeaufschlagt.

Insgesamt wird durch die zugrundeliegende Erfindung gewährleistet, dass die Stützräder 32, 32a über die Hubzylinder 18, 19 sowohl die Bewegung der Hubzylinder 12, 13 als auch die Bewegung der Hubzylinder 5, 6 während der gesamten Erntefahrt nachvollziehen und auf diese Weise stets mit dem Boden in Verbindung stehen. Hierdurch wird die Last des Vorsatzgerätes 4 gleichmäßig und unabhängig von der Auslenkung des Schneidwerkes 4 über die Stützräder 32, 32a in den Boden eingeleitet, so dass eine dauerhafte Entlastung der Vorderachse 31 des Mähdreschers 2, unabhängig von einem sich ändernden Bodenniveau, erreicht wird.

Es liegt im Rahmen des Könnens eines Fachmanns die hier am Beispiel eines selbstfahrenden Mähdreschers beschriebene Erfindung auf beliebige landwirtschaftliche Arbeits- oder Erntemaschinen zu übertragen.

### Bezugszeichenliste:

- 1: Selbstfahrende Erntemaschine
- 2: Selbstfahrender Mähdrescher
- 3: Vorsatzgerät
- 4: Schneidwerk
- 5: Hubzylinder
- 6: Hubzylinder
- 7: Bodenkopiersteuerung
- 8: Parallelogrammmechanismus
- 9: Koppelleitung
- 10: Anschluss
- 11: Anschluss
- 12: Hubzylinder
- 13: Hubzylinder
- 14: Schwenkachse
- 15: Seitenwand
- 16: Seitenwand
- 17: Kolbenstange
- 17': Kolbenstange
- 18: Hubzylinder
- 19: Hubzylinder
- 20: Bodenabtastbügel
- 21: Bodenabtastbügel
- 22: Bodenabtastbügel
- 23: Bodenabtastbügel
- 24: Verbundwelle
- 25: Verbundwelle
- 26: Sensor
- 27: Sensor
- 28: Sensor
- 29: Schrägförderer
- 30: Kolbenstange
- 31: Vorderachse
- 32: Stützrad
- 32a: Stützrad

- 34: Kolbenstange
- 35: Hebel

- 39: Einzugskanal
- 40: Oberlenker
- 41: Konsole
- 42: Schneidwerksrückwand
- 43: Haltebock
- 44: Lenker
- 45: Lenkdrehachse
- 46: Achsklaue
- 47: Welle
- 48: Lenkhebel
- 49: Kolbenstange
- 50: Hubzylinder
- 51: Kolbenstange
- 51': Kolben
- 51 a: Kolbenstange
- 52: Verbindungselement
- 53: Schwinge
- 54: Hebel
- 55: Konsole

- 60: Steuerelektronik
- 61: Steuerventil
- 62: Steuerventil
- 63: Steuerventil
- 64: Steuerventil

### Bezugszeichenliste:

- 65: Steuerventil
- 66: Druckanschluss
- 66a: Druckanschluss
- 66b: Druckanschluss
- 66c: Druckanschluss
- 67: Signalleitung
- 68: Signalleitung
- 69: Signalleitung
- 70: Hydraulikleitung
- 71: kolbenflächenseitige Druckkammer
- 72: kolbenflächenseitige Druckkammer
- 73: Pumpe
- 74: Tank
- 75: Signalleitung
- 76: Rücklaufanschluss
- 76a: Rücklaufanschluss
- 76b: Rücklaufanschluss
- 76c: Rücklaufanschluss
- 77: Hydraulikleitung
- 78: kolbenringseitige Druckkammer
- 79: Kolben
- 80: kolbenflächenseitige Druckkammer
- 81: Arbeitsanschluss
- 81 a: Arbeitsanschluss
- 81b: Arbeitsanschluss
- 81 c: Arbeitsanschluss
- 85: Hydraulikleitung
- 86: kolbenflächenseitige Druckkammer
- 87: kolbenringseitige Druckkammer
- 88: Kolben
- 89: Hydraulikleitung
- 91: Hydraulikleitung
- 92: Hydraulikleitung
- 93: Hydraulikleitung
- 95: kolbenflächenseitige Druckkammer
- 96: kolbenringseitige Druckkammer
- 97: Hydraulikleitung
- 100: kolbenflächenseitige Druckkammer
- 105: kolbenringseitige Druckkammer
- 106: Hydraulikleitung

## Patentansprüche

1. Selbstfahrende Erntemaschine (1) mit zumindest einem über eine Bodenkopiersteuerung höhenveränderlichen Vorsatzgerät (3), wobei an dem Vorsatzgerät mindestens eine Tastvorrichtung zur Höhen- und Querverstellung sowie wenigstens ein Stützrad (32, 32a) angeordnet sind,
**dadurch gekennzeichnet, dass**
das Vorsatzgerät (3) bodenkopierend geführt wird und das zumindest eine höhenveränderliche Stützrad (32, 32a) in die Bodenkopiersteuerung (7) integriert ist.

2. Selbstfahrende Erntemaschine nach Anspruch 1,
**dadurch gekennzeichnet, dass**
die Bodenkopiersteuerung (7) aus Steuerventilen (61, 62, 63, 64, 65) zusammengesetzt ist.

3. Selbstfahrende Erntemaschine nach Anspruch 2,
**dadurch gekennzeichnet, dass**
den Steuerventilen (61, 62, 63, 64, 65) Hubzylinder (5, 6, 12, 13, 18, 19) zugeordnet sind.

4. Selbstfahrende Erntemaschine nach einem der Ansprüche 2 oder 3,
**dadurch gekennzeichnet, dass**
das Stützrad (32, 32a) von wenigstens einem Hubzylinder (18, 19) höhenbeweglich geführt wird und die Ansteuerung des Hubzylinders (18, 19) über ein von der Bodenkopiereinrichtung (7) angesteuertes Steuerventil (62, 63) erfolgt, wobei das Steuerventil (62, 63) in Parallelschaltung zu den Steuerventilen (64, 65) der Bodenkopiersteuerung (7) geschattet ist.

5. Selbstfahrende Erntemaschine nach einem oder mehreren der vorangegangenen Ansprüche,
**dadurch gekennzeichnet, dass**
zumindest ein Steuerventil (61) mit den an dem Schrägförderer (29) angeordneten Hubzylindern (12, 13) verbunden ist.

6. Selbstfahrende Erntemaschine nach einem oder mehreren der vorangegangenen Ansprüche,
**dadurch gekennzeichnet, dass**
die kolbenflächenseitige Druckkammer (95) wenigstens eines am Vorsatzgerät (3) angeordneten Hubzylinders (19) über eine Leitung (93) mit der kolbenflächenseitigen Druckkammer (100) zumindest eines weiteren am Vorsatzgerät (3) angeordneten Hubzylinders (18) verbunden ist, wobei die Leitung (93) zwischen den kolbenflächenseitigen Druckkammern (95, 100) der am Vorsatzgerät (3) angeordneten Hubzylinder (18, 19) von wenigstens einer weiteren Leitung (70) abgezweigt wird.

7. Selbstfahrende Erntemaschine nach Anspruch 6,
**dadurch gekennzeichnet, dass**
die Leitung (70) mit der kolbenflächenseitigen Druckkammer (71, 72) des wenigstens einen an dem Schrägförderer (29) angeordneten Hubzylinder (12, 13) verbunden ist.

8. Selbstfahrende Erntemaschine nach einem oder mehreren der vorangegangenen Ansprüche,
**dadurch gekennzeichnet, dass**
die Höhenveränderung des Vorsatzgerätes (3) und/oder des Stützrades (32, 32a) selbsttätig und/oder manuell erfolgt.

9. Selbstfahrende Erntemaschine nach einem oder mehreren der vorangegangenen Ansprüche,
**dadurch gekennzeichnet, dass**
das Verfahren des Stützrades (32, 32a) in Abhängigkeit von den Signalen der Bodenkopiersteuerung (7) erfolgt.

10. Selbstfahrende Erntemaschine nach einem oder mehreren der vorangegangenen Ansprüche,
**dadurch gekennzeichnet, dass**
die Stützräder (32, 32a) über einen Parallelogrammmechanismus (8) angelenkt werden.

11. Selbstfahrende Erntemaschine nach Anspruch 10,
**dadurch gekennzeichnet, dass**
der Parallelogrammmechanismus (8) aus mindestens zwei Lenkern (40, 44) und wenigstens zwei Konsolen (35, 41) zusammengesetzt ist.

12. Selbstfahrende Erntemaschine nach Anspruch 10 oder 11,
**dadurch gekennzeichnet, dass**
der Parallelogrammmechanismus (8) drehbeweglich mit wenigstens einem Hubzylinder (18) verbunden ist.

13. Selbstfahrende Erntemaschine nach einem oder mehreren der Ansprüche 10 oder 12,
**dadurch gekennzeichnet, dass**
der Parallelogrammmechanismus (8) an der Rückseite (42) des Vorsatzgerätes (3) angeordnet ist.

14. Selbstfahrende Erntemaschine nach einem oder mehreren der Ansprüche 10 bis 13,
**dadurch gekennzeichnet, dass**
die Lenkdrehachse (45) des Stützrades (32, 32a) durch den Parallelogrammmechanismus (8) annähernd senkrecht gehalten wird.

15. Selbstfahrende Erntemaschine nach Anspruch 14,
**dadurch gekennzeichnet, dass**
die Lenkdrehachse (45) einstellbar ist.

## Claims

1. A self-propelled harvester (1) comprising at least one front-mounted implement (3) which is variable in height by way of a ground tracing control, wherein arranged at the front-mounted implement (3) is at least one sensing device for heightwise and transverse adjustment and at least one support wheel (32, 32a),
**characterised in that**
the front-mounted implement (3) is guided in ground-tracing relationship and the at least one variable-height support wheel (32, 32a) is integrated into the ground tracing control (7).

2. A self-propelled harvester according to claim 1 **characterised in that** the ground tracing control (7) is composed of control valves (61, 62, 63, 64, 65).

3. A self-propelled harvester according to claim 2 **characterised in that** stroke cylinders (5, 6, 12, 13, 18, 19) are associated with the control valves (61, 62, 63, 64, 65).

4. A self-propelled harvester according to claim 2 or claim 3 **characterised in that** the support wheel (32, 32a) is guided movably in respect of height by at least one stroke cylinder (18, 19) and actuation of the stroke cylinder (18, 19) is effected by way of a control valve (62, 63) actuated by the ground tracing device (7), wherein the control valve (62, 63) is connected in a parallel circuit with the control valves (64, 65) of the ground tracing control (7).

5. A self-propelled harvester according to one or more of the preceding claims **characterised in that** at least one control valve (61) is connected to the stroke cylinders (12, 13) arranged at the inclined conveyor (29).

6. A self-propelled harvester according to one or more of the preceding claims **characterised in that** the pressure chamber (95) at the piston surface side of at least one stroke cylinder (19) arranged at the front-mounted implement (3) is connected by way of a line (93) to the pressure chamber (100) at the piston surface side of at least one further stroke cylinder (18) arranged at the front-mounted implement (3), wherein the line (93) between the pressure chambers (95, 100) at the piston surface side of the stroke cylinders (18, 19) arranged at the front-mounted implement (3) is branched off by at least one further line (70).

7. A self-propelled harvester according to claim 6 **characterised in that** the line (70) is connected to the pressure chambers (71, 72) at the piston surface side of the at least one stroke cylinder (12, 13) arranged at the inclined conveyor (29).

8. A self-propelled harvester according to one or more of the preceding claims **characterised in that** the height variation of the front-mounted implement (3) and/or the support wheel (32, 32a) is effected automatically and/or manually.

9. A self-propelled harvester according to one or more of the preceding claims **characterised in that** displacement of the support wheel (32, 32a) is effected in dependence on the signals of the ground tracing control (7).

10. A self-propelled harvester according to one or more of the preceding claims **characterised in that** the support wheels (32, 32a) are pivotably mounted by way of a parallelogram mechanism (8).

11. A self-propelled harvester according to claim 10 **characterised in that** the parallelogram mechanism (8) is composed of at least two links (40, 44) and at least two brackets (35, 41).

12. A self-propelled harvester according to claim 10 or claim 11 **characterised in that** the parallelogram mechanism (8) is rotatably connected to at least one stroke cylinder (18).

13. A self-propelled harvester according to one or more of claims 10 and 12 **characterised in that** the parallelogram mechanism (8) is arranged at the rear side (42) of the front-mounted implement (3).

14. A self-propelled harvester according to one or more of claims 10 to 13 **characterised in that** the steering axis of rotation (45) of the support wheel (32, 32a) is held approximately perpendicularly by the parallelogram mechanism (8).

15. A self-propelled harvester according to claim 14 **characterised in that** the steering axis of rotation (45) is adjustable.

## Revendications

1. Machine agricole de récolte (1) automotrice équipée d'au moins un appareil adaptable (3), dont une commande de copiage du sol peut faire varier la hauteur et sur lequel sont montés au moins un dispositif d'exploration pour réglage en hauteur et transversal ainsi qu'au moins une roue de soutien (32, 32), **caractérisée en ce que** l'appareil adaptable (3) est guidé en copiant le sol et la roue de soutien (32, 32a) au nombre d'une au moins est intégrée à la commande de copiage du sol.

2. Machine agricole de récolte automotrice selon la revendication 1, **caractérisée en ce que** la commande de copiage du sol (7) est composée de soupapes de commande (61, 62, 63, 64, 65).

3. Machine agricole de récolte automotrice selon la revendication 1, **caractérisée en ce qu'**aux soupapes de commande (61, 62, 63, 64, 65) sont associés des vérins (5, 6, 12, 13, 18, 19).

4. Machine agricole de récolte automotrice selon la revendication 2 ou 3, **caractérisée en ce que** la roue de soutien (32, 32a) est déplacée en hauteur par un vérin (18, 19) dont la commande est assurée par une soupape de commande (62, 63) qui est actionnée par le dispositif de copiage de sol (7) et qui est montée en parallèle avec les soupapes de commande (64, 65) du dispositif de copiage (7).

5. Machine agricole de récolte automotrice selon une ou plusieurs des revendications précédentes, **caractérisée en ce qu'**au moins une soupape de commande 61) est reliée aux vérins (12, 13) montés sur le transporteur incliné (29).

6. Machine agricole de récolte automotrice selon une ou plusieurs des revendications précédentes, **caractérisée en ce que** la chambre de pression (95) située du côté de la face de piston dans au moins un vérin (19) monté sur l'appareil adaptable (3) est reliée par une conduite (93) à la chambre de piston (100) située du côté de la face de piston dans au moins un vérin (18) monté sur l'appareil adaptable (3) et la conduite (93) reliant les chambres (95, 100) situées du côté de la face de piston dans des vérins (18, 19) montés sur l'appareil adaptable (3) est en dérivation sur au moins une autre conduite (70).

7. Machine agricole de récolte automotrice selon la revendication 6, **caractérisée en ce que** la conduite (70) est reliée aux chambres de pression (71, 72) situées du côté de la face de piston dans au moins un vérin (12, 13) monté sur le transporteur incliné (29).

8. Machine agricole de récolte automotrice selon une ou plusieurs des revendications précédentes, **caractérisée en ce que** la variation en hauteur de l'appareil adaptable (3) et/ou de la roue de soutien (32, 32a) s'effectue automatiquement et/ou manuellement.

9. Machine agricole de récolte automotrice selon une ou plusieurs des revendications précédentes, **caractérisée en ce que** le déplacement de la roue de soutien (32, 32a) s'effectue en fonction des signaux de la commande de copiage du sol (7).

10. Machine agricole de récolte automotrice selon une ou plusieurs des revendications précédentes, **caractérisée en ce que** les roues de soutien (32, 32a) sont articulées par l'intermédiaire d'un mécanisme à parallélogramme (8).

11. Machine agricole de récolte automotrice selon la revendication 10, **caractérisée en ce que** le mécanisme à parallélogramme (8) est composé d'au moins deux bras (40, 44) et d'au moins deux consoles (35, 41).

12. Machine agricole de récolte automotrice selon la revendication 10 ou 11, **caractérisée en ce que** le mécanisme à parallélogramme (8) est relié en pouvant tourner à au moins un vérin (18).

13. Machine agricole de récolte automotrice selon une ou plusieurs des revendications 10 et 12, **caractérisée en ce que** le mécanisme à parallélogramme (8) est disposé sur la face arrière (42) de l'appareil adaptable (3).

14. Machine agricole de récolte automotrice selon une ou plusieurs des revendications 10 à 13, **caractérisée en ce que** l'axe de rotation directionnel (45) de la roue de soutien (32, 32a) est maintenu à peu près vertical par le mécanisme à parallélogramme (8).

15. Machine agricole de récolte automotrice selon une revendication 14, **caractérisée en ce que** l'axe de rotation directionnel (45) est réglable.
